# EUROPEAN PATENT SPECIFICATION

(11) **EP 3 886 359 B1**
(45) Date of publication and mention of the grant of the patent: **04.09.2024**
(21) Application number: 20165874.7
(22) Date of filing: 26.03.2020
(51) Int. Cl.: H04L 9/32, H04W 12/12, H04W 48/20, H04W 48/12, H04W 12/037, H04W 12/106

(54) **METHOD FOR INTEGRITY PROTECTION OF SYSTEM INFORMATION IN A CELLULAR MOBILE NETWORK**
VERFAHREN ZUM INTEGRITÄTSSCHUTZ VON SYSTEMINFORMATIONEN IN EINEM ZELLULAREN MOBILFUNKNETZ
PROCÉDÉ DE PROTECTION DE L'INTÉGRITÉ DES INFORMATIONS SYSTÈME DANS UN RÉSEAU MOBILE CELLULAIRE

(43) Date of publication of application: 29.09.2021
(73) Proprietor: Deutsche Telekom AG, 53113 Bonn (DE)
(72) Inventor: KLATT, Axel, 50999 Köln (DE)
(74) Representative: Vossius & Partner Patentanwälte Rechtsanwälte mbB

(56) References cited:
- US-A1- 2015 139 422
- "3rd Generation Partnership Project; Technical Specification Group Services and System Aspects Study on 5G Security Enhancement against False Base Stations (Release 16)", 3 December 2019 (2019-12-03), XP051835580, Retrieved from the Internet <URL:https://ftp.3gpp.org/tsg_sa/WG3_Security/TSGS3_97_Reno/Docs/S3-194684.zip S3-194684/S3-194684-TR33.809-rm.docx> [retrieved on 20191203]
- HUAWEI ET AL: "Preventing UE from connecting to FBSs", vol. SA WG3, no. Reno, US; 20191118 - 20191122, 11 November 2019 (2019-11-11), XP051824351, Retrieved from the Internet <URL:https://ftp.3gpp.org/tsg_sa/WG3_Security/TSGS3_97_Reno/Docs/S3-194034.zip S3-194034-Preventing UE from Connecting to FBSs.docx> [retrieved on 20191111]

## Description

The present disclosure relates to a system and method for integrity protection of system information in a cellular mobile network. The disclosure encompasses a secure transmission of system broadcast messages in a cellular mobile network.

Security of mobile networks has been increased from generation to generation. The latest 5G developments have, alongside a mutual authentication of the user equipment (UE) to the mobile network as well as the mobile network to the UE and the increased key length for encryption of user data, also introduced the integrity of user data. Thereby it can be ensured that user data cannot be modified on the air interface by a man-in-the-middle attack.

Particularly during connection establishment between UE and base station, points of attack may be generated. Two of the fundamental vulnerabilities with regard to security are the first messages a UE interchanges with a mobile network (Radio Resource Control (RRC) connection setup) as well as the generally unprotected system broadcast messages (System Information Block (SIB)) which provide an overview of available mobile networks (for Public Land Mobile Network (PLMN) Selection) and information needed to access the chosen network plus information which influences the idle mode mobility of an User Equipment (UE), which mobile network should be chosen for communication.

US 2015/0382188 A1 discloses a method and apparatus for providing broadcast channel encryption to enhance cellular network security. It is particularly directed towards prevention of radio jamming attacks.

SIBs may be transmitted via a Broadcast Control Channel (BCCH) and may provide a command for cell selection and cell reselection, i.e. the process of a UE selecting or changing a cell of the cellular network. With respect to the first vulnerability, already during development of UMTS, higher security measures have been proposed which have been partially implemented in the 5G standard. Security of the SIB, however, has not been increased in any of the past mobile network generations including 5G.

The unprotected SIB of LTE may also be attacked by a so-called signal-overshadowing. In this context, the following articles have been published:
https://www.usenix.org/conference/usenixsecurity19/presentation/yang-hojoon
https://www.heise.de/newsticker/meldung/36C3-Signal-Overshadowing-Angriff-auf-4G-Mobilfunk-als-besserer-IMSI-Catcher-4624255.html

In a signal-overshadowing attack, the invader manipulates the system broadcast message channel utilising a fake base station in order to redirect UEs camping or staying on a regular base station by a manipulated system broadcast messages to a fake base station (which ideally has a lower security level as LTE, i.e. UMTS or even GSM). There, an attack against the mobile communication user may be performed.

Is therefore an object of the present disclosure to improve security of the system broadcast messages and to prevent possible attacks on a mobile communication user. This object is achieved by the present disclosure. The invention is defined in the independent claims. Dependent claims describe preferred embodiments.

In particular, the present disclosure comprises a method of ensuring integrity of system broadcast messages in a cellular mobile communications network. The method comprises receiving of a master information block (MIB) by a user equipment (UE) from a base station over a physical broadcast channel (PBCH). At least one system information Block (SIB) is received by the UE from the base station comprising configuration information. At least one additional SIB is received by the UE from the base station which comprises cell selection information and/or cell reselection information and/or neighbouring cell information. At least one of the additional SIBs is transmitted integrity proof.

The integrity may be obtained by performing a cryptographic hash function on at least one of the SIBs or groups of SIBs. The integrity is obtained by performing an integrity operation on at least one of the SIBs or groups of SIBs or by performing an encryption operation on at least one of the SIBs or groups of SIBs.

A key for the integrity operation and/or a key for the encryption operation is received at the UE during a connection establishment between the UE and the base station.

A key for the integrity operation and/or a key for the encryption operation may be preconfigured in a Subscriber Identity Module, SIM, and/or a Universal Integrated Circuit Card, UICC, and changed via SIM and/or UICC functions.

At least one of the additional SIB can contain mobility related configuration information.

MIB and/or SIB comprising configuration information may be transmitted integrity proof. Alternatively, MIB and/or SIB comprising configuration information may be transmitted without protection.

The integrity can be verified by the UE.

The disclosure further relates to a system for ensuring integrity of system broadcast messages in a cellular mobile network. The system comprises receiving means configured to receive a master information block (MIB) on a user equipment (UE) from a base station. The receiving means are also configured to receive at least one system information Block (SIB) on the UE from the base station comprising configuration information and to receive at least one additional SIB on the UE from the base station comprising cell selection information and/or cell reselection information and/or neighbouring cell information. Transmitting means are configured to transmit at least one of the additional SIBs integrity proof.

The disclosure further relates to a User equipment (UE) comprising means configured to receive a master information block (MIB) from a base station and configured to receive at least one system information Block (SIB) from the base station comprising configuration information. Said means are further configured to receive at least one additional SIB transmitted integrity proof from the base station, the at least one additional SIB comprising cell selection information and/or cell reselection information and/or neighbouring cell information.

The present disclosure also encompasses a base station comprising means configured to send a master information block (MIB) to a user equipment (UE) and configured to send at least one system information Block (SIB) to the UE comprising configuration information. Said means are further configured to send at least one additional SIB to the UE comprising cell selection information and/or cell reselection information and/or neighbouring cell information. The base station also comprises means configured to transmit at least one of the additional SIBs integrity proof.

The disclosure also relates to a computer program product configured to perform the method as described above and/or a computer-readable storage medium comprising said program product.

The disclosure is further described using the following figures.
- Fig. 1: shows a basic configuration according to an exemplary embodiment of the present disclosure, and
- Fig. 2: shows a configuration according to an example of the present disclosure.

The disclosure relates to a method of secure transmission of configuration information in a telecommunication network. In particular, the method may be employed for secure transmission of system broadcast messages. Secure transmission may particularly comprise manipulation-safe transmission.

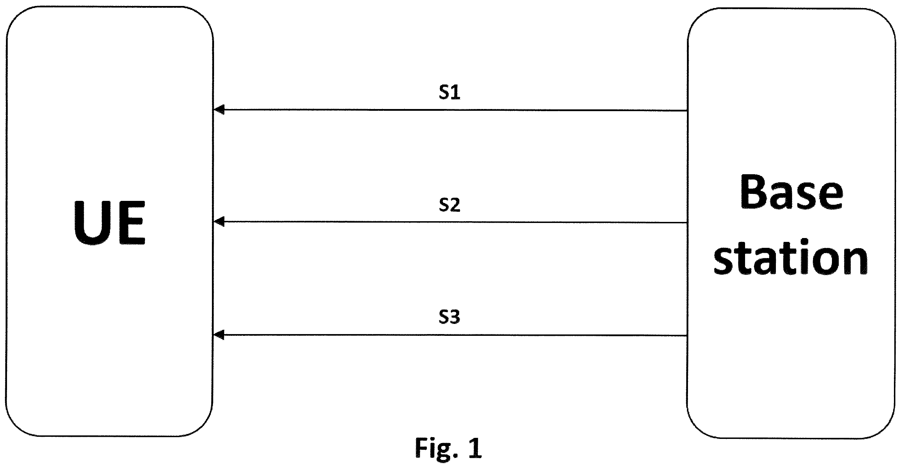

Fig. 1 shows a basic configuration of a method according to an example of the present disclosure. The method comprises receiving (S1) of a master information block (MIB) by a user equipment (UE) from a base station over a physical broadcast channel (PBCH). At least one system information Block (SIB) is received (S2) by the UE from the base station comprising configuration information. At least one additional SIB is received (S3) by the UE from the base station which comprises cell selection information and/or cell reselection information and/or neighbouring cell information. At least one of the additional SIBs is transmitted integrity proof. The steps S1, S2, S3 may be performed subsequently or in groups or simultaneously.

The method of secure transmission of system broadcast messages according to one example is employed in a cellular mobile communication network. In order to establish a connection between a User Equipment (UE) and a base station a Radio Resource Control (RRC) connection message may be sent by the UE. The UE may be a mobile terminal such as a mobile phone or a smart phone.

The UE receives system broadcast messages from the base station which may be arranged as blocks (System Information Block, SIB). These messages provide an overview of available mobile networks. Furthermore, information indicating which mobile communication networks are available and can be chosen for communication are transmitted (Public Land Mobile Network (PLMN) selection). Preferably, system broadcast messages may be transmitted via a system broadcast message channel of a mobile communication network.

However, these system broadcast messages are often insufficiently protected against attacks from the outside.

It is therefore advantageous to protect the system broadcast messages and the system broadcast channel of a mobile communication network, respectively via encryption functions or, in addition or alternatively, via integrity functions from manipulation. Thereby it can be ensured that the system broadcast messages of a cell of a PLMN originate from this PLMN and have not been manipulated by an invader.

In particular, it has to be ensured that the first access to a PLMN, e.g. in the case of roaming, is possible.

The system broadcast messages are logically grouped on the system broadcast channel in so-called system information blocks (SIB). For further details it is referred to the Third Generation Partnership Project (3GPP) standards TS36.331 and TS38.331.

Table 1 shows a configuration of the system information structured in system information blocks (SIB) according to Release 6 as well as a respective interval and applicability in idle and connected state.

**Table 1: SIB configuration of LTE (3FPP TS36.331)**

| **Message** | **Content** | **Interval** | **Applicability** |
|---|---|---|---|
| MIB | Most essential parameters | 40 ms | Idle & Connected |
| SIB1 | Cell access related parameters | 80 ms | Idle & Connected |
| SIB2 | Common and shared channel configuration | 160 ms | Idle & Connected |
| SIB3 & SIB4 | SIB3: Common cell reselection information | 320 ms | Idle only |
| | SIB4: Neighbouring cell information | | |
| SIB5 | Inter-frequency cell reselection information | 640 ms | Idle only |
| SIB6 & SIB7 | SIB6: UTRA cell reselection information | 640 ms | Idle only |
| | SIB7: GERAN cell reselection information | | |

Therein, MIB denotes a Master Information Block with parameters essential for the communication between UE and a base station and SIB1 to SIB7 denote the respective system information blocks (SIB). Also, more or fewer blocks and/or blocks with a different configuration may be used. Table 1 depicts the configuration according to the above-mentioned telecommunication standards.

According to the present example, MIB, SIB1 and SIB2 are necessary for the (first) access to a LTE mobile communication network. The remaining SIBs mentioned in the example above are configurations for mobility of the UE in idle mode. Those are the SIB which may be manipulated by signal overshadowing. In order to prevent unwanted access to the configuration or a manipulation of the parameters, all blocks may be protected together, in groups or individually. In the present example, the blocks are grouped in {MIB, SIB1, SIB2} and {SIB3, 4, 5, 6, 7}. Preferably, at least one of the SIB of the second group contains mobility configuration information. However, other groupings or configurations may also be advantageous.

The present direction is specifically, but not exclusively, directed towards protecting the SIBs transmitted during mobility of the UE. Hence, {SIB3, 4, 5, 6, 7} may be protected in order to prevent a signal overshadowing attack, while the SIB necessary for connection establishment, i.e. {MIB, SIB1, SIB2} containing configuration information, may be transmitted unprotected. In other words, the integrity of particular system broadcast messages or SIBs may be ensured.

In this example, where group {SIB3, 4, 5, 6, 7} shall be protected, an access to the mobile communication network is possible as usual taking into account {MIB, SIB1, SIB2} to then communicate information relating to protection of the group {SIB3, 4, 5, 6, 7} (and further SIBs where applicable) to the UE during setup of the individual RRC connection. The respective SIBs may be protected using at least one of the following methods. In particular, an integrity proof or manipulation-safe transmission may be provided.

{SIB3, 4, 5, 6, 7} (and further SIBs where applicable) may be protected using a hash function, wherein the hash value enables a simple integrity verification of the sent SIBs. In particular, a cryptographic hash function such as the Message-Digest Algorithm 5 (MD5) may be employed.

A deviation of an identification sent by a hash function or a key may therefore be an indication of an attack.

Furthermore, an SIB integrity key may be employed which is used to verify the integrity of protected SIBs once being received. Therefore, a suitable integrity operation may be performed on the {SIB3, 4, 5, 6, 7} (and further SIBs where applicable). This may be done group-wise or individually for specific SIBs. Preferably, an integrity key is used for verification of the received and protected SIBs which is transmitted once a secure RRC connection is established based on the connection setup with the network to the UE. Establishment of a secure RRC connection between the network and UE for a signalling radio bearer (SRB) is a standard procedure described in 3GPP TS36.331 for LTE and 3GPP TS 38.331 for NR (5G).

The respective SIB may also be encrypted. In particular, {SIB3, 4, 5, 6, 7} (and further SIBs where applicable) may be encrypted using a suitable encryption operation. The key used for decryption of the received and protected SIBs is transmitted once a secure RRC connection is established based on the connection setup with the network to the UE. As above the establishment of a secure RRC connection between the network and UE for a signalling radio bearer (SRB) is a standard procedure described in 3GPP TS36.331 for LTE and 3GPP TS 38.331 for NR (5G).

Instead of using the secure RRC connection for transmission of the key for the above-mentioned integrity operation or encryption, the transmission may also be performed using Subscriber Identity Module (SIM) and/or Universal Integrated Circuit Card (UICC) functions.

Changes to the respective entries in SIM/UICC may e.g. be performed via Over-The-Air (OTA) functionality of said cards.

Furthermore, a pre-configuration of keys by roaming in a PLMN may be convenient.

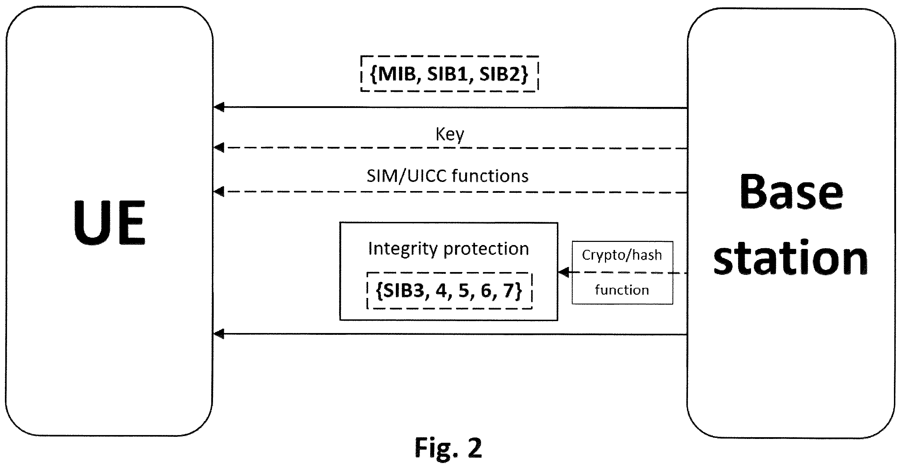

Fig. 2 shows an example of the present disclosure. As described above, a group {MIB, SIB1, SIB2} is transmitted without protection. A second group {SIB3, 4, 5, 6, 7} is transmitted with integrity protection. For this purpose, a crypto function and/or a hash function may be employed to protect the respective SIB or group of SIBs. In case an integrity key and/or encryption key is used, the key may be sent by the base station (indicated by dotted lines). Furthermore, SIM or UICC functions may be employed as described above.

Preferably, at least one block comprising mobile communication network information and/or cell selection information and/or cell reselection information and/or neighbouring cell information is protected by at least one of the above-mentioned methods. This encompasses the secure, in particular manipulation-safe, transmission of configuration parameters. In other words, the integrity of system broadcast messages is ensured.

In this way, attacks on the communication may successfully be addressed. Particularly the unintended communication with fake base stations, the so-called signal overshadowing, may be prevented. Furthermore, inconsistencies may be detected and taken as an indication for an attack or manipulation.

The method may be employed for one or more SIBs and/or the MIB. Most preferably, the integrity of the SIB containing cell selection information and cell reselection information {SIB3, 4, 5, 6, 7} is ensured by the presented method.

The present disclosure also relates to a system corresponding to the method as described above. Thus, the disclosure also encompasses a system for ensuring integrity of system broadcast messages in a cellular mobile network. The system comprises receiving means configured to receive a master information block (MIB) on a user equipment (UE) from a base station. The receiving means are also configured to receive at least one system information Block (SIB) on the UE from the base station comprising configuration information and to receive at least one additional SIB on the UE from the base station comprising cell selection information and/or cell reselection information and/or neighbouring cell information. Transmitting means are configured to transmit at least one of the additional SIBs integrity proof.

The disclosure further encompasses a UE configured to perform the method described above and a base station configured to perform the method described above.

The disclosure also relates to a corresponding computer program product configured to perform the method described above and a computer-readable storage medium comprising the program product.

Other aspects, features, and advantages will be apparent from the summary above, as well as from the description that follows, including the figures and the claims.

While the invention has been illustrated and described in detail in the drawings and foregoing description, such illustration and description are to be considered illustrative or exemplary and not restrictive. It will be understood that changes and modifications may be made by those of ordinary skill within the scope of the following claims.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

## Claims

1. Method of ensuring integrity of system broadcast messages in a cellular mobile network, the method comprising:
receiving a master information block, MIB, by a user equipment, UE, from a base station over a physical broadcast channel, PBCH;
receiving at least one system information Block, SIB, by the UE from the base station comprising configuration information, and
receiving additional SIBs by the UE from the base station comprising cell selection information and/or cell reselection information and/or neighbouring cell information,
wherein at least one of the additional SIBs is transmitted integrity proof by the base station by performing a cryptographic hash function on at least one of the additional SIBs or groups of the additional SIBs using a key;
wherein the key is received at the UE from the base station during a establishment connection establishment between the UE and the base station; and
wherein the method further comprises using the key for verifying integrity, by the UE, of the at least one of the additional SIBs that is transmitted integrity proof.

2. Method according to claim 1, wherein the UE comprises a Subscriber Identity Module, SIM, and/or a Universal Integrated Circuit Card, UICC.

3. Method according to any one of the preceding claims, wherein at least one of the additional SIBs contains mobility related configuration information.

4. Method according to any one of the preceding claims, wherein MIB and/or SIB comprising configuration information is transmitted integrity proof.

5. Method according to any one of claims 1 to 3, wherein MIB and/or SIB comprising configuration information is transmitted without protection.

6. System for ensuring integrity of system broadcast messages in a cellular mobile network, the system comprising:
a base station,
a user equipment, UE, comprising receiving means configured to receive a master information block, MIB, from the base station, and
configured to receive at least one system information Block, SIB, on the UE from the base station comprising configuration information, and
further configured to receive additional SIBs on the UE from the base station comprising cell selection information and/or cell reselection information and/or neighbouring cell information; and
the base station comprising transmitting means configured to transmit at least one of the additional SIBs integrity proof by performing a cryptographic hash function on at least one of the additional SIBs or groups of the additional SIBs using a key;
wherein the UE is configured to receive the key from the base station during a establishment of a connection between the UE and the base station; and
wherein the UE is configured to verify integrity of the at least one of the additional SIBs that is transmitted integrity proof using the key.

7. User equipment, UE, comprising
means configured to receive a master information block, MIB, from a base station, and
configured to receive at least one system information Block, SIB, from the base station comprising configuration information, and
further configured to receive additional SIBs from the base station, the additional SIBs comprising cell selection information and/or cell reselection information and/or neighbouring cell information,
wherein at least one of the additional SIBs is transmitted integrity proof by the base station by performing a cryptographic hash function on at least one of the additional SIBs or groups of the additional SIBs using a key;
wherein the UE is configured to receive the key from the base station during a establishment of a connection between the UE and the base station; and
wherein the UE is configured to verify integrity of the at least one of the additional SIBs that is transmitted integrity proof using the key.

8. Base station for use with a method according to any one of claims 1 to 5 or in a system according to claim 6, the base station comprising
means configured to send a master information block, MIB, to a user equipment, UE, and
configured to send at least one system information Block, SIB, to the UE comprising configuration information, and
further configured to send additional SIBs to the UE comprising cell selection information and/or cell reselection information and/or neighbouring cell information;
means configured to transmit at least one of the additional SIBs integrity proof by performing a cryptographic hash function on at least one of the additional SIBs or groups of the additional SIBs using a key; and
means configured to transmit the key to the UE during a establishment of a connection between the UE and the base station.

9. Computer program product configured to perform the method according to any one of claims 1 to 5.

10. Computer-readable storage medium comprising the program product according to claim 9.

## Patentansprüche

1. Verfahren zum Sicherstellen der Integrität von System-Broadcast-Nachrichten in einem zellularen Mobilfunknetz, wobei das Verfahren umfasst:
Empfangen eines Master-Informationsblocks, MIB, durch ein Benutzergerät, UE, von einer Basisstation über einen physikalischen Broadcast-Kanal, PBCH;
Empfangen von zumindest einem Systeminformationsblock, SIB, durch das UE von der Basisstation, der Konfigurationsinformationen umfasst, und
Empfangen zusätzlicher SIBs durch das UE von der Basisstation, die Zellenauswahlinformationen und/oder Zellenneuauswahlinformationen und/oder Nachbarzelleninformationen umfassen,
wobei zumindest einer der zusätzlichen SIBs von der Basisstation integritätsgesichert übertragen wird, indem eine kryptographische Hash-Funktion an zumindest einem der zusätzlichen SIBs oder Gruppen von zusätzlichen SIBs unter Verwendung eines Schlüssels durchgeführt wird;
wobei der Schlüssel von der Basisstation während eines Aufbaus einer Verbindung zwischen dem UE und der Basisstation an dem UE empfangen wird; und
wobei das Verfahren ferner das Verwenden des Schlüssels zum Verifizieren der Integrität von zumindest einem der zusätzlichen SIBs, der integritätsgesichert übertragen wird, durch das UE umfasst.

2. Verfahren nach Anspruch 1, wobei das UE ein Subscriber Identity Module, SIM, und/oder eine Universal Integrated Circuit Card, UICC, umfasst.

3. Verfahren nach einem der vorhergehenden Ansprüche, wobei zumindest einer der zusätzlichen SIBs mobilitätsbezogene Konfigurationsinformationen enthält.

4. Verfahren nach einem der vorhergehenden Ansprüche, wobei der MIB und/oder SIB die Konfigurationsinformationen enthält, die integritätsgesichert übertragen werden.

5. Verfahren nach einem der Ansprüche 1 bis 3, wobei der MIB und/oder SIB-Konfigurationsinformationen enthält, die ungeschützt übertragen werden.

6. System zur Sicherstellung der Integrität von System-Broadcast-Nachrichten in einem zellularen Mobilfunknetz, wobei das System umfasst:
eine Basisstation,
ein Benutzergerät, UE, das Empfangsmittel umfasst, die dazu ausgelegt sind, einen Master-Informationsblock, MIB, von der Basisstation zu empfangen und
dazu ausgelegt sind, zumindest einen Systeminformationsblock, SIB, an dem UE von der Basisstation zu empfangen, der Konfigurationsinformationen umfasst, und ferner dazu ausgelegt sind, zusätzliche SIBs an dem UE von der Basisstation zu empfangen, die Zellenauswahlinformationen und/oder Zellenneuauswahlinformationen und/oder Nachbarzelleninformationen umfassen;
wobei die Basisstation Übertragungsmittel umfasst, die dazu ausgelegt sind, zumindest einen der zusätzlichen SIBs integritätsgesichert zu übertragen, indem sie eine kryptografische Hash-Funktion an zumindest einem der zusätzlichen SIBs oder Gruppen von zusätzlichen SIBs unter Verwendung eines Schlüssels durchführt;
wobei das UE dazu ausgelegt ist, den Schlüssel von der Basisstation während eines Aufbaus einer Verbindung zwischen dem UE und der Basisstation zu empfangen; und
wobei das UE dazu ausgelegt ist, die Integrität von zumindest einem der zusätzlichen SIBs, der integritätsgesichert übertragen wird, unter Verwendung des Schlüssels zu verifizieren.

7. Benutzergerät, UE, enthaltend
Mittel, die dazu ausgelegt sind, einen Master-Informationsblock, MIB, von einer Basisstation zu empfangen und dazu ausgelegt sind, zumindest einen Systeminformationsblock, SIB, von der Basisstation zu empfangen, der Konfigurationsinformationen umfasst, und ferner dazu ausgelegt sind, zusätzliche SIBs von der Basisstation zu empfangen, wobei die zusätzlichen SIBs Zellenauswahlinformationen und/oder Zellenneuauswahlinformationen und/oder Nachbarzelleninformationen umfassen,
wobei zumindest einer der zusätzlichen SIBs von der Basisstation integritätsgesichert übertragen wird, indem eine kryptographische Hash-Funktion an zumindest einem der zusätzlichen SIBs oder Gruppen von zusätzlichen SIBs unter Verwendung eines Schlüssels durchgeführt wird;
wobei das UE dazu ausgelegt ist, den Schlüssel von der Basisstation während eines Aufbaus einer Verbindung zwischen dem UE und der Basisstation zu empfangen; und
wobei das UE dazu ausgelegt ist, die Integrität von zumindest einem der zusätzlichen SIBs, der integritätsgesichert übertragen wird, unter Verwendung des Schlüssels zu verifizieren.

8. Basisstation zur Verwendung mit einem Verfahren nach einem der Ansprüche 1 bis 5 oder in einem System nach Anspruch 6, wobei die Basisstation enthält:
Mittel, die dazu ausgelegt sind, einen Master-Informationsblock, MIB, an ein Benutzergerät, UE, zu senden und dazu ausgelegt sind, zumindest einen Systeminformationsblock, SIB, an das UE zu senden, der Konfigurationsinformationen umfasst, und ferner dazu ausgelegt sind, zusätzliche SIBs an das UE zu senden, die Zellenauswahlinformationen und/oder Zellenneuauswahlinformationen und/oder Nachbarzelleninformationen umfassen;
Mittel, die dazu ausgelegt sind, zumindest einen der zusätzlichen SIBs integritätsgesichert zu übertragen, indem eine kryptographische Hash-Funktion an zumindest einem der zusätzlichen SIBs oder Gruppen von zusätzlichen SIBs unter Verwendung eines Schlüssels durchgeführt wird; und
Mittel, die dazu ausgelegt sind, den Schlüssel während des Aufbaus einer Verbindung zwischen dem UE und der Basisstation an das UE zu übertragen.

9. Computerprogrammprodukt zum Durchführen des Verfahrens nach einem der Ansprüche 1 bis 5.

10. Computerlesbares Speichermedium, umfassend das Programmprodukt nach Anspruch 9.

## Revendications

1. Procédé destiné à assurer l'intégrité de messages diffusés de système dans un réseau mobile cellulaire, le procédé comprenant :
la réception d'un MIB [master information block], par un équipement utilisateur UE depuis une station de base sur un PBCH [physical broadcast channel] ;
la réception d'au moins un SIB [system information block - bloc d'informations système] par l'UE depuis la station de base comprenant des informations de configuration, et
la réception de SIB supplémentaires par l'UE depuis la station de base comprenant des informations de sélection de cellule et/ou des informations de resélection de cellule et/ou des informations de cellule voisine,
dans lequel au moins un des SIB supplémentaires est transmis à l'épreuve de l'intégrité par la station de base en effectuant une fonction de hachage cryptographique sur au moins un des SIB supplémentaires ou sur des groupes de SIB supplémentaires en utilisant une clé ;
dans lequel la clé est reçue sur l'UE depuis la station de base pendant l'établissement d'une connexion entre l'UE et la station de base ; et
dans lequel le procédé comprend en outre l'utilisation de la clé pour vérifier l'intégrité, par l'UE, de l'au moins un des SIB supplémentaires qui est transmise à l'épreuve de l'intégrité.

2. Procédé selon la revendication 1, dans lequel l'UE comprend un SIM [Subscriber Identity Module] et/ou une UICC [Universal Integrated Circuit Card].

3. Procédé selon l'une quelconque des revendications précédentes, dans lequel au moins un des SIB supplémentaires contient des informations de configurations liées à la mobilité.

4. Procédé selon l'une quelconque des revendications précédentes, dans lequel un MIB et/ou un SIB comprenant des informations de configuration sont transmis à l'épreuve de l'intégrité.

5. Procédé selon l'une quelconque des revendications 1 à 3, dans lequel un MIB et/ou un SIB comprenant des informations de configuration sont transmis sans protection.

6. Système destiné à assurer l'intégrité de messages diffusés de système dans un réseau mobile cellulaire, le système comprenant :
une station de base,
un équipement utilisateur UE comprenant un moyen de réception configuré pour recevoir un MIB depuis la station de base, et
configuré pour recevoir au moins un SIB sur l'UE depuis la station de base comprenant des informations de configuration, et
configuré en outre pour recevoir des SIB supplémentaires sur l'UE depuis la station de base comprenant des informations de sélection de cellule et/ou des informations de resélection de cellule et/ou des informations de cellule voisine ; et
la station de base comprenant un moyen de transmission configuré pour transmettre au moins un des SIB supplémentaires à l'épreuve de l'intégrité en effectuant une fonction de hachage cryptographique sur au moins un des SIB supplémentaires ou des groupes des SIB supplémentaires en utilisant une clé ;
dans lequel l'UE est configuré pour recevoir la clé depuis la station de base pendant l'établissement d'une connexion entre l'UE et la station de base ; et
dans lequel l'UE est configuré pour vérifier l'intégrité de l'au moins un des SIB supplémentaires qui est transmis à l'épreuve de l'intégrité en utilisant la clé.

7. Equipement utilisateur UE comprenant
un moyen configuré pour recevoir un MIB depuis une station de base et configuré pour recevoir au moins un SIB depuis la station de base comprenant des informations de configuration, et
configuré en outre pour recevoir des SIB supplémentaires depuis la station de base, les SIB supplémentaires comprenant des informations de sélection de cellule et/ou des informations de resélection de cellule et/ou des informations de cellule voisine,
dans lequel au moins un des SIB supplémentaires est transmis à l'épreuve de l'intégrité par la station de base en effectuant une fonction de hachage cryptographique sur au moins un des SIB supplémentaires ou sur des groupes des SIB supplémentaires en utilisant une clé ;
dans lequel l'UE est configuré pour recevoir la clé depuis la station de base pendant l'établissement d'une connexion entre l'UE et la station de base ; et
dans lequel l'UE est configuré pour vérifier l'intégrité de l'au moins un des SIB supplémentaires qui est transmis à l'épreuve de l'intégrité en utilisant la clé.

8. Station de base destinée à être utilisée avec un procédé selon l'une quelconque des revendications 1 à 5 ou dans un système selon la revendication 6, la station de base comprenant :
un moyen configuré pour envoyer un MIB à un UE et
configuré pour envoyer au moins un SIB à l'UE comprenant des informations de configuration, et
configuré en outre pour envoyer des SIB supplémentaires à l'UE comprenant des informations de sélection de cellule et/ou des informations de resélection de cellules et/ou des informations de cellule voisine ;
un moyen configuré pour transmettre au moins un des SIB supplémentaires à l'épreuve de l'intégrité en effectuant une fonction de hachage cryptographique sur au moins un des SIB supplémentaires ou des groupes des SIB supplémentaires en utilisant une clé ; et
un moyen configuré pour transmettre la clé à l'UE pendant l'établissement d'une connexion entre l'UE et la station de base.

9. Produit-programme d'ordinateur configuré pour effectuer le procédé selon l'une quelconque des revendications 1 à 5.

10. Support de stockage lisible par ordinateur comprenant le produit-programme selon la revendication 9.
